# EUROPÄISCHE PATENTSCHRIFT

(11) **EP 4 014 726 B1**
(45) Veröffentlichungstag und Bekanntmachung des Hinweises auf die Patenterteilung: **26.03.2025**
(21) Anmeldenummer: 21213388.8
(22) Anmeldetag: 09.12.2021
(51) Int. Cl.: A01J 25/16, A01J 27/00

(54) **SCHMIERVORRICHTUNG ZUM SCHMIEREN VON KÄSELAIBEN**
SMEARING DEVICE FOR SMEARING A CHEESE WHEEL
DISPOSITIF DE LAVAGE PERMETTANT DE LAVER DES MEULES DE FROMAGE

(30) Priorität: 21.12.2020 CH 16372020
(43) Veröffentlichungstag der Anmeldung: 22.06.2022
(73) Patentinhaber: Kaesaro AG, 9444 Diepoldsau (CH)
(72) Erfinder: Lässer, Franz, 9444 Diepoldsau (CH); Lässer, Philipp, 9444 Diepoldsau (CH); Nussbaumer, Hanno, 6845 Hohenems (AT)
(74) Vertreter: Gachnang AG Patentanwälte

(56) Entgegenhaltungen:
- FR-A- 1 530 488
- IT-A1- MI20 090 854
- US-B1- 7 592 029

## Beschreibung

Die Erfindung bezieht sich auf eine Schmiervorrichtung zum Schmieren von Käselaiben nach dem Oberbegriff des Anspruchs 1.

Bei der Käseherstellung wird Käsebruch in Formen gepresst und anschliessend werden die Käselaibe nebeneinander auf Käsebrettern in Lagern gereift. Während dieser Lagerung werden die Käselaibe regelmässig gewendet, so dass die grossen parallel verlaufenden Aussenflächen abwechselnd als Käseoberseite und Käseunterseite wahrgenommen werden. Die Aussenfläche eines Käselaibs wird von der Käseoberseite, der Käseunterseite und einer Järbseite gebildet, wobei die Järbseite die Käseoberseite mit der Käseunterseite verbindet. Die Järbseite wird auch als Käserand bezeichnet. Bei den meisten Käsen ist der Umfang der Ober- und Unterseite kreisförmig. Für Raclette oder andere Käse wird auch ein quadratischer Umfang gewählt, so dass diese Käselaibe zum Schneiden von flachen Stücken besser geeignet sind.

Zum Erzielen einer gewünschten Reifung und einer härteren Oberfläche, bzw. einer Käserinde, wird die jeweilige Oberseite und die Järbseite mittels Bürsten mit einer vorzugsweise salzhaltigen Flüssigkeit behandelt. Diese Behandlung wird als Schmieren bezeichnet.

Wenn beispielsweise Käselaibe 7kg schwer sind und während einer 15 Monate langen Reifezeit anfänglich täglich, später weniger oft, gewendet und abgerieben bzw. geschmiert werden, so ergibt sich für das Wenden und für das Schmieren ein grosser Arbeitsaufwand, der möglichst weitgehend mit Anlagen durchgeführt wird. Es gibt Anlagen mit stationären und solche mit mobilen Vorrichtungen zum Behandeln, bzw. Wenden und/oder Schmieren, von Käselaiben.

Bei stationären Vorrichtungen sind Holzbretter mit Käselaiben in sogenannten Horden zusammengestellt und die Horden oder aus den Horden entnommene Stapel mit Brettern und Käselaiben werden beispielsweise von selbstfahrenden Transportgeräten zu einer stationären Vorrichtung transportiert. Nach der Behandlung der Käselaibe werden die Horden oder die Stapel wieder in den ihnen zugeordneten Lagerbereich transportiert.

Bei einer selbstfahrenden Vorrichtung zum Behandeln von Käselaiben bewegt sich die Vorrichtung durch Lagergassen und behandelt bei der jeweils aktuellen Position seitlich der Gasse gelagerte Käselaibe. Die seitlich der Gasse auf Käsebrettern gelagerten Käselaibe werden auf den Käsebrettern von einer Fördereinrichtung zur Vorrichtung zum Behandeln gebracht und dann behandelt. Nach der Behandlung bringt die Fördereinrichtung die Bretter mit den Käselaiben wieder in eine Lagerposition. Wenn in der aktuellen Position der selbstfahrenden Vorrichtung, die von der Steuerung zum Behandeln vorgesehenen Käselaibe behandelt sind, bewegt sich die selbstfahrende Vorrichtung zur nächsten Position mit gelagerten Käselaiben und behandelt diese. Wenn die zum Behandeln vorgesehenen Käselaibe einer Gasse behandelt sind, kann die selbstfahrende Vorrichtung in einer nächsten Gasse eingesetzt werden.

EP 1 941 794 B1 zeigt ein Pflegegerät, welches seitlich einzelne Käselaibe aus einem Regal entnimmt, wendet und zur weiteren Behandlung auf einen Tisch legt.

FR 1 530 488 A beschreibt eine Behandlungsvorrichtung mit einer drehbaren Bürste, die an einem Schwenkarm angeordnet ist. Am von der Bürste abgewandten freien Ende des Schwenkarms ist ein Gegengewicht angeordnet.

CH 420 714 beschreibt ein mobiles Pflegegerät, das einzelne grosse Käselaibe mit einem Gabelstapler von einer Regalfläche anhebt, aus dem Regal zieht, um eine Staplerachse dreht und über eine Wendevorrichtung auf eine drehbare Oberfläche eines Behandlungstisches einer Schmiereinrichtung bringt. Seitlich am Tischgestell ist eine Parallelogramm-Verbindung angeordnet, die zu einer vertikal nach oben stehenden, ersten Bürste führt. Die erste Bürste wird von einer Feder an den Umfangsrand des auf dem Behandlungstisch liegenden Käselaibs gepresst. Über ein Schwenkgelenk ist an der ersten Bürste eine zweite Bürste befestig, welche mit Ihrem Eigengewicht auf der Käseoberfläche aufliegt. Die unter anderem von der Anpresskraft abhängige Schmierwirkung der Bürsten kann nur durch den Austausch der Bürsten, der Parallelogramm-Verbindung oder der Feder angepasst werden. Anpassungen des Schmiervorgangs an den Reifegrad bzw. an das Alter oder an die Art des zu schmierenden Käselaibes sind somit nicht oder nur mit grossem Aufwand möglich. Zudem kann gleichzeitig nur ein Käselaib geschmiert werden.

WO 2012/172506 A1 beschreibt eine selbstfahrende Vorrichtung, bei der eine kombinierte Wende- und Schmiereinrichtung auf die jeweilige Regalhöhe bewegt wird, von der ein erstes Käsebrett mit mehreren Käselaiben in die Vorrichtung aufgenommen und dabei die Oberseite der Käselaibe gebürstet wird. Die Vorrichtung hält ein zweites Käsebrett bereit, dem die Oberseiten der Käselaibe zugeführt werden. Die beiden beidseits der Käselaibe angeordneten Käsebretter und die Käselaibe werden in einem ersten Schritt um 90° um eine parallel zu den Längsachsen der Käsebretter verlaufende Achse gedreht. Die Käselaibe gelangen dadurch in eine Lage, bei der ihre Unter- und Oberseiten vertikal ausgerichtet sind. Die umlaufende Randfläche liegt in einem unteren Bereich auf einem Antriebsband auf, mittels dem die Käselaibe in eine Drehung versetzt und dabei die Randflächen der Käselaibe gebürstet werden. Anschliessend werden die Käsebretter und die Käselaibe in einem zweiten Schritt um 90° um die parallel zu den Längsachsen der Käsebretter verlaufende Achse gedreht. Danach können die Käselaibe auf dem zweiten Käsebrett in das Regal geschoben werden.

Die Kombination des Wendens und Bürstens führt dazu, dass sich diese beiden Behandlungen gegenseitig unterbrechen und reduziert die Effizienz des Wendens und des Bürstens. Wenn junge, d.h. wenig gereifte, Käselaibe für das Bürsten des Randes auf dem Rand aufliegend gedreht werden, können diese Käselaibe beschädigt werden, weil sie dazu noch nicht genügend stabil sind. Aufgrund möglicher Verformungen ist die Position der dem Rand der Käselaibe zugeordneten Bürsten nicht immer optimal. Das Schmieren der Oberseiten der Käselaibe beim Aufnehmen der Käselaibe in die Vorrichtung ist für viele Käsesorten nicht genügend. Anpassungen der Positionen der zum Schmieren eingesetzten Bürsten an unterschiedliche Höhen der einzelnen Käselaibe sind nicht möglich.

Die erfindungsgemässe Aufgabe besteht nun darin eine einfache Lösung zu finden, welche das Schmieren von Käselaiben optimal durchführbar macht.

Diese Aufgabe wird durch eine Schmiervorrichtung mit den Merkmalen des Anspruchs 1 gelöst. Die abhängigen Ansprüche beschreiben alternative bzw. vorteilhafte Ausführungsvarianten, welche weitere Aufgaben lösen.

Im Rahmen eines ersten erfinderischen Schrittes wurde erkannt, dass mit identischen Formen hergestellte Käselaibe unterschiedliche Abstände zwischen der Oberseite und der Unterseite, also unterschiedliche Höhen, aufweisen können. Wenn nun bei einem Käselaib, der auf einem Drehteller liegt, gemäss einer handelsüblichen Lösung die Tellerbürste zum Behandeln der Oberseite auf einer festen, vorgegebenen Höhe positioniert wird, so hängt die Anpresskraft, mit der die Bürste auf die Oberseite des Käselaibs wirkt, auch von der jeweiligen Höhe dieses Käselaibs ab. Für ein optimales Schmieren soll eine vorgegebene Anpresskraft der Bürste auch bei unterschiedlichen Käsehöhen genügend genau gewährleistet sein. Zudem soll die bei unterschiedlichen Käsehöhen im Wesentlichen gleiche Anpresskraft der Bürste verstellbar sein, so dass eine an die Art und/oder den Reifegrad des jeweiligen Käselaibs angepasste vorgegebene Anpresskraft erzielbar ist.

In einem zweiten erfinderischen Schritt wurde erkannt, dass eine einstellbare und nach der Einstellung bei unterschiedlichen Käsehöhen im Wesentlichen gleichbleibende Anpresskraft erzielbar ist, wenn die Schmiervorrichtung eine um eine Wippenachse schwenkbare Wippe und daran angeordnet eine Bürsteneinrichtung mit einer Bürste umfasst. Die Wippenachse verläuft im Wesentlichen horizontal, so dass das Gewicht der Bürsteneinrichtung ein auf die Wippe um die Wippenachse wirkendes erstes Drehmoment erzielt. Die Schmiervorrichtung umfasst zudem eine verstellbare Drehmomenteinrichtung zum Einstellen eines auf die Wippe um die Wippenachse wirkenden zweiten Drehmomentes. Aus der Überlagerung der vom Gewicht der Bürsteneinrichtung und von der Drehmomenteinrichtung stammenden Drehmomente geht ein resultierendes Drehmoment hervor, welches zu einer Anpresskraft der Bürste an eine Käseoberfläche führt. Eine gewünschte Anpresskraft kann somit mit einer entsprechenden Einstellung des zweiten Drehmoments durch die Drehmomenteinrichtung erzielt werden. Diese Anpresskraft bleibt im Wesentlichen gleich, auch wenn die Wippe aufgrund von unterschiedlichen Käsehöhen unterschiedlich geneigt ist.

Die erfindungsgemässe Schmiervorrichtung zum Schmieren von Käselaiben umfasst eine Trageinrichtung und mindestens eine Bürsteneinrichtung. Die Bürsteneinrichtung ist über eine verstellbare Verbindung mit der Trageinrichtung verbunden und umfasst eine Bürste, die mit einer Anpresskraft an eine Oberseite des Käselaibs anlegbar ist. Die Schmiervorrichtung umfasst zudem eine um eine Wippenachse schwenkbare Wippe und eine Drehmomenteinrichtung zum Einstellen eines um die Wippenachse auf die Wippe wirkenden vorgebbaren Drehmomentes. Die Wippenachse ist an der Trageinrichtung positioniert. Die Bürsteneinrichtung ist so an der Wippe angeordnet, dass eine resultierende Gewichtskraft der Bürsteneinrichtung in einem Abstand zur Wippenachse auf die Wippe übertragen wird.

Die Drehmomenteinrichtung umfasst ein in einem Abstand zur Wippenachse an der Wippe angeordnetes Gewicht, dessen Grösse vorzugsweise verstellbar ist. Zum Verstellen des Gewichtes können beispielsweise einzelne Gewichtssegmente eingesetzt oder entfernt werden, was mit viel Aufwand und wenig Flexibilität verbunden ist.

Die Drehmomenteinrichtung umfasst ein in einem Abstand zur Wippenachse an der Wippe angeordnetes Gewicht, dessen Abstand von der Wippenachse einstellbar ist.

Zum Einstellen eines gewünschten Abstandes umfasst die Drehmomenteinrichtung einen Stellantrieb, der das an der Wippe angeordnete Gewicht über eine erste Betätigungsverbindung entlang der Wippe verstellbar macht. Dazu kann die erste Betätigungsverbindung ausgehend von einer vom Stellantrieb drehbaren Welle eine an der Welle befestigte erste Kurbel und einen vom freien Ende der ersten Kurbel zum Gewicht führenden Pleuel umfassen.

Wenn die Bürste von einer Arbeitsposition zu einer Parkposition verstellbar sein soll, so wird der Wechsel zwischen diesen Positionen vorzugsweise mit dem Stellantrieb erzielt. Der Stellantrieb und eine zweite Betätigungsverbindung machen die Wippe in die Parkposition schwenkbar, bei der die Bürste vom Käselaib abgehoben ist.

Mit einer entgegengesetzten Bewegung der zweiten Betätigungsverbindung wird die Wippe wieder freigegeben, so dass die Bürste in Kontakt zum Käselaib tritt.

Die zweite Betätigungsverbindung umfasst beispielsweise eine an der drehbaren Welle befestigte zweite Kurbel, welche mit einer Kraft auf die Wippe wirken kann, die der resultierende Gewichtskraft der Bürsteneinrichtung entgegengesetzt ist.

Gemäss weiterer Ausführungsformen wird, das von der verstellbaren Drehmomenteinrichtung erzeugte, zweite Drehmoment durch eine auf die Wippe wirkende verstellbare Kraft erzielt. Vorzugsweise stammt die auf die Wippe wirkende Kraft von einem Federelement, insbesondere von einer mechanischen Feder, wobei die Befestigungsenden des Federelements bzw. der Feder an der Wippe und an einer mit der Trageinrichtung verbundenen Halterung befestigt sind. Zum Verstellen der vom Federelement auf die Wippe wirkenden Kraft, bzw. des von der Kraft bewirkten zweiten Drehmoments, kann der Angriffspunkt des Federelements an der Wippe von der Schwenkachse weg oder auf diese zu verstellt werden, während die Position der Halterung festbleibt. Die vom Federelement auf die Wippe wirkende Kraft, bzw. das von der Kraft bewirkte zweite Drehmoment, kann auch durch eine Änderung des Abstandes der Halterung vom Angriffspunkt des Federelements an der Wippe erzielt werden.

Wenn die Bürsteneinrichtung einen Bürstenantrieb umfasst, kann dieser die als Tellerbürste ausgebildete Bürste um eine im Wesentlichen senkrecht zur Käseoberfläche ausgerichtete Achse drehen. Dies ist für eine optimale Schmierung vorteilhaft.

Die verstellbare Verbindung zwischen der Trageinrichtung und der Bürsteneinrichtung ist vorzugsweise als schwenkbare Parallelogramm-Verbindung mit zwei Armen und zwei kurzen Gliedern ausgebildet, wobei die Arme schwenkbar mit den Gliedern verbunden sind. Ein Arm ist ein Abschnitt der Wippe und der andere Arm erstreckt sich von der Trageinrichtung zur Bürsteneinrichtung. Die kurzen Glieder werden von einem Abschnitt der Trageinrichtung und von einem Abschnitt der Bürsteneinrichtung gebildet. Mit dieser Parallelogramm-Verbindung kann gewährleistet werden, dass die Tellerbürste bei allen Kipplagen der Wippe gleich ausgerichtet ist und darum in optimaler Ausrichtung auf die Käseoberfläche wirkt.

Wenn die Bürsteneinrichtung schwer ist, kann die Länge der Wippe, die für das Positionieren des Gewichtes benötigt wird, gross werden. Mit einer Entlastungsfeder in der verstellbaren Verbindung kann eine kürzere Wippe verwendet werden. Die Entlastungsfeder erstreckt sich von der Trageinrichtung zur Bürsteneinrichtung und überträgt einen Teil des Gewichts der Bürsteneinrichtung an die Trageinrichtung.

Bei einer vorteilhaften Ausführungsform umfasst die Schmiereinrichtung einen an der Trageinrichtung drehbar angeordneten Drehteller. Der Drehteller und die Bürsteneinrichtung sind so relativ zueinander positioniert, dass die Oberseite eines auf dem Drehteller angeordneten Käselaibs von der Bürste in einem von der Järbseite bis über die Mitte der Oberfläche hinausgehenden Bereich überstrichen werden kann.

Damit die Oberseite und die Järbseite geschmiert werden kann, umfasst die Schmiervorrichtung auch eine an der Trageinrichtung drehbar angeordnete Randbürste. Zu beiden Bürsten führt eine Zuführung für Flüssigkeit. Während der Käselaib auf dem Drehteller dreht, schmiert die Tellerbürste mit einer vorgebbaren Anpresskraft die Käseoberfläche und die Randbürste mit an den Käserand angepasster Position die Järbseite.

Die erfindungsgemässe Schmiervorrichtung wird in einer Vorrichtung zum Behandeln von Käselaiben vorzugsweise zusammen mit einer Wendeeinrichtung eingesetzt. Solche Behandlungsvorrichtungen umfassen zudem eine Zuführeinrichtung und eine Übergabeeinrichtung. Die Zuführeinrichtung macht mindestens zwei auf einem Käsebrett entlang einer Anordnungsachse nebeneinander angeordnete Käselaibe der Wendeeinrichtung zuführbar. Die gewendeten Käselaibe werden von der Übergabeeinrichtung an mindestens zwei nebeneinander angeordnete erfindungsgemässe Schmiervorrichtung übergeben. Die geschmierten Käselaibe werden von der Übergabeeinrichtung auf ein Käsebrett gebracht, auf dem sie dann beispielsweise zu einem Lagerplatz gebracht werden. Eine vorteilhafte Behandlungsvorrichtung umfasst eine Fördereinrichtung zum Fördern von Käsebrettern mit Käselaiben zwischen Lagerplätzen und der Zuführeinrichtung bzw. der Übergabeeinrichtung.

Anhand der Figuren wird die Erfindung im Folgenden näher beschrieben. Dabei zeigen
- Figur 1: eine Seitenansicht einer Schmiervorrichtung und einem darunter angeordneten Käselaib,
- Figur 2: eine Seitenansicht einer Schmiervorrichtung gemäss Figur 1, die zusätzlich einen Drehteller und eine Seitenbürste umfasst.

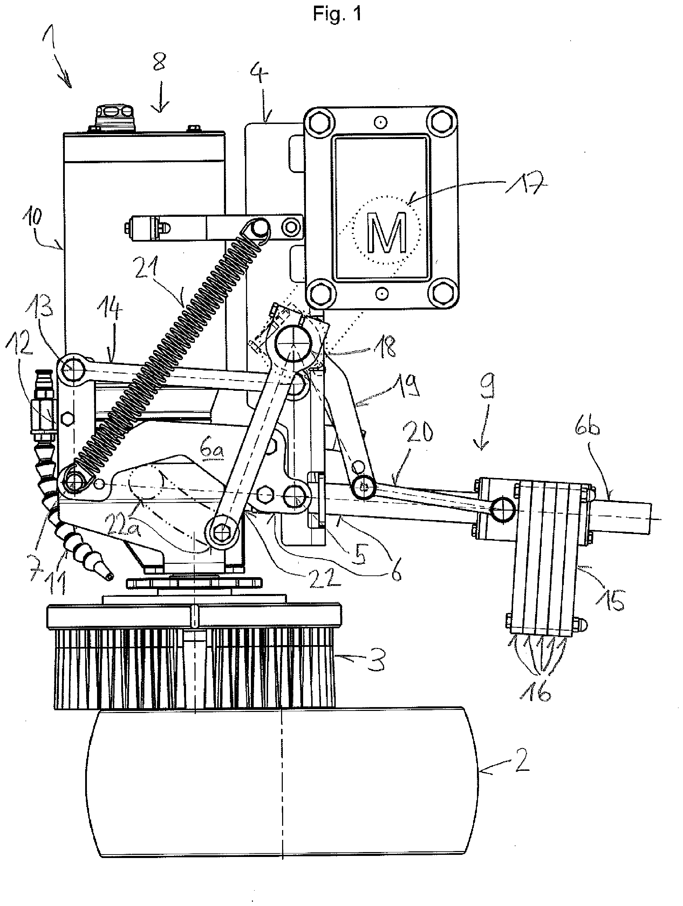

Figur 1 zeigt eine Schmiervorrichtung 1 zum Schmieren eines Käselaibs 2 mit einer Bürste 3. Die Schmiervorrichtung umfasst eine Trageinrichtung 4, die zur Verbindung mit einem Gehäuse einer Behandlungsvorrichtung dient. An der Trageinrichtung 4 ist eine um eine Wippenachse 5 schwenkbare Wippe 6 angeordnet. In der dargestellten Ausführung umfasst die Wippe 6 auf einer der Bürste 3 zugewandten Seite der Wippenachse 5 einen ersten Wippenabschnitt 6a. Beim freien Ende des ersten Wippenabschnitts 6a ist eine um eine Befestigungsachse 7 schwenkbare Verbindung zu einer Bürsteneinrichtung 8 ausgebildet. Die Wippe 6 umfasst auf einer von der Bürste 3 abgewandten Seite der Wippenachse 5 einen zweiten Wippenabschnitt 6b, an dem eine Drehmomenteinrichtung 9 zum Einstellen eines um die Wippenachse 5 auf die Wippe 6 wirkenden vorgebbaren Drehmomentes angeordnet ist.

In der dargestellten Ausführung umfasst die Bürsteneinrichtung 8 einen Bürstenantrieb 10, welcher die als Tellerbürste ausgebildete Bürste 3 um eine im Wesentlichen senkrecht zur Oberfläche des Käselaibs ausgerichtete Achse drehbar macht. Eine Zuführung 11 für Flüssigkeit ermöglicht die Schmierung mit Flüssigkeit.

Die verstellbare Verbindung zwischen der Trageinrichtung 4 und der Bürsteneinrichtung 8 ist als schwenkbare Parallelogramm-Verbindung mit zwei Armen und zwei kurzen Gliedern ausgebildet. Der ersten Wippenabschnitt 6a bildet einen der Arme und ist eine Verbindung zwischen der Wippenachse 5 und der Befestigungsachse 7. Ein mit der Bürsteneinrichtung 8 verbundenes Halterungselement 12 und ein Abschnitt der Trageinrichtung 4 bilden je eines der kurzen Glieder. Die kurzen Glieder erstrecken sich von der Befestigungsachse 7 bzw. von der Wippenachse 5 zu Parallelogramm-Achsen 13. Zwischen den beiden Parallelogramm-Achsen 13 erstreckt sich ein Arm 14. Mit dieser Parallelogramm-Verbindung kann gewährleistet werden, dass die Tellerbürste bei allen Kipplagen der Wippe gleich ausgerichtet ist und darum in optimaler Ausrichtung auf die Käseoberfläche wirkt.

Mit der Parallelogramm-Verbindung ist die Bürsteneinrichtung 8 seitlich zur Wippenachse 5 angeordnet und die resultierende Gewichtskraft der Bürsteneinrichtung 8 wird in einem Abstand zur Wippenachse 5 auf einer ersten Seite auf die Wippe 6, bzw. auf den ersten Wippenabschnitt 6b, übertragen.

In der dargestellten Ausführungsform umfasst die Drehmomenteinrichtung 9 ein in einem Abstand zur Wippenachse 5 auf einer zweiten Seite an der Wippe 6, bzw. am zweiten Wippenabschnitt 6b, angeordnetes Gewicht 15. Das Gewicht 15 ist aus Gewichtssegmenten 16 zusammengestellt, so dass dessen Grösse durch das Einsetzen oder Entfernen von Gewichtssegmenten 16 veränderbar ist.

Das Gewicht 15 ist entlang des zweiten Wippenabschnitt 6b verschiebbar, so dass dessen Abstand zur Wippenachse 5 einstellbar ist.

Zum Einstellen eines gewünschten Abstandes umfasst die Drehmomenteinrichtung 9 einen an der Trageinrichtung 4 angeordneten Stellantrieb 17, der das an der Wippe 6 angeordnete Gewicht 15 über eine erste Betätigungsverbindung entlang der Wippe 6 verstellbar macht. Die erste Betätigungsverbindung umfasst ausgehend von einer vom Stellantrieb 17 drehbaren Welle 18 eine an der Welle 18 befestigte erste Kurbel 19 und einen vom freien Ende der ersten Kurbel 19 zum Gewicht 15 führenden Pleuel 20.

Aufgrund des integrierten Bürstenantriebs 10 ist die Bürsteneinrichtung 8 relativ schwer. Damit weder das Gewicht 15 noch die Länge der Wippe 6 für das Positionieren des Gewichtes 15 allzu gross wird, umfasst die dargestellte Ausführung eine Entlastungsfeder 21. Die Entlastungsfeder 21 erstreckt sich von der Trageinrichtung 4 zur Bürsteneinrichtung 8, bzw. zu deren Halterungselement 12, und überträgt einen Anteil des Gewichts der Bürsteneinrichtung 8 an die Trageinrichtung 4.

Bei der dargestellten Ausführung ist die Bürste 3 von einer Arbeitsposition beim Käselaib 2 zu einer Parkposition in einem Abstand zum Käselaib 2 verstellbar. Dieser Wechsel zwischen den beiden Bürstenpositionen wird mit dem Stellantrieb 17 erzielt. Der Stellantrieb 17 und eine zweite Betätigungsverbindung machen die Wippe 6 in die Parkposition schwenkbar, bei der die Bürste 3 vom Käselaib 2 abgehoben ist. Mit einer entgegengesetzten Bewegung der zweiten Betätigungsverbindung wird die Wippe 6 wieder freigegeben, so dass die Bürste in Kontakt zum Käselaib 2 tritt.

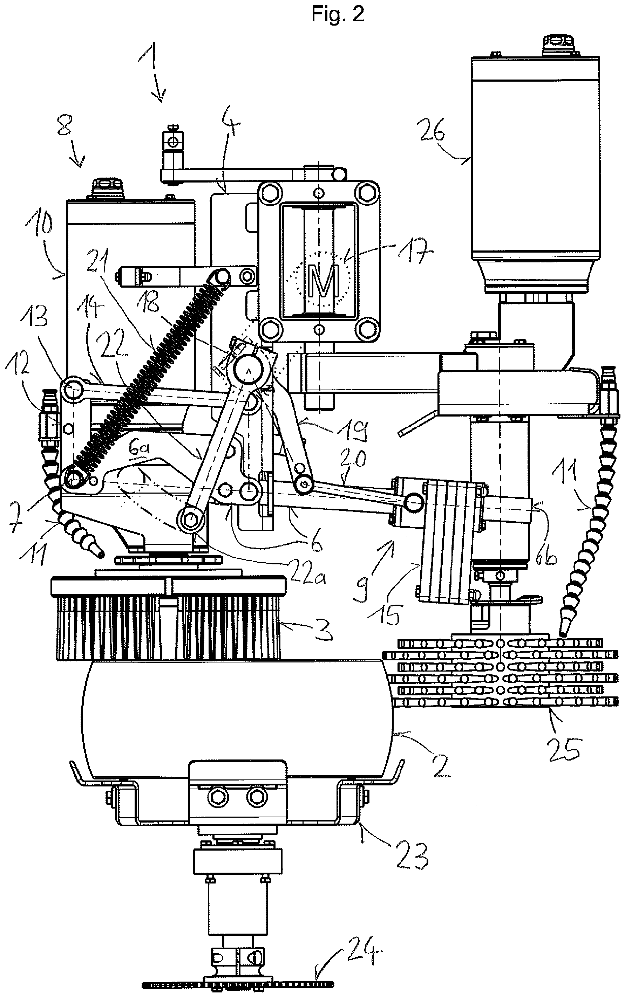

Um die Wippe 6 in die Parkposition zu schwenken umfasst die zweite Betätigungsverbindung eine an der drehbaren Welle 18 befestigte zweite Kurbel 22. Am freien Ende der zweiten Kurbel 22 sind Rollen 22a angeordnet, die unter den ersten Wippenabschnitt 6a greifen und diesen bei der entsprechenden Bewegung der zweiten Kurbel 22 anheben (vgl. Fig. 2). Dabei wirkt eine Kraft auf die Wippe 6, die der resultierende Gewichtskraft der Bürsteneinrichtung 4 entgegengesetzt ist.

Figur 2 zeigt eine Ausführungsform mit allen Elementen der Figur 1, die zusätzlich den Käselaib drehbar und die Järbseite schmierbar macht. Ein drehbarer Drehteller 23 wird vorzugsweise über ein Zahnrad 24 von einem nicht dargestellten Drehteller-Antrieb in Drehung versetzt. Der Drehteller 23 und die Bürsteneinrichtung 8 sind so relativ zueinander positioniert, dass die Oberseite eines auf dem Drehteller 23 angeordneten Käselaibs 2 von der Bürste 3 in einem von der Järbseite bis über die Mitte der Oberfläche hinausgehenden Bereich überstreichbar ist.

Damit auch die Järbseite des Käselaibs 2 geschmiert werden kann, umfasst die Schmiervorrichtung eine an der Trageinrichtung 4 drehbar angeordnete Randbürste 25. Um die Randbürste 25 zu drehen, ist ein Randbürsten-Antrieb 26 mit der Randbürste 25 verbunden. Eine Zuführung 11 führt Flüssigkeit zur Randbürste 25. Während der Käselaib 2 vom Drehteller 23 gedreht wird, schmiert die Randbürste 25 in einer an den Käserand angepassten Position die Järbseite.

## Patentansprüche

1. Schmiervorrichtung (1) zum Schmieren von Käselaiben (2) mit einer Trageinrichtung (4) und einer Bürsteneinrichtung (8), wobei die Bürsteneinrichtung (8) über eine verstellbare Verbindung mit der Trageinrichtung (4) verbunden ist und eine Bürste (3) umfasst, die mit einer Anpresskraft an eine Oberseite des Käselaibs (2) anlegbar ist, wobei die Schmiervorrichtung (1) eine um eine Wippenachse (5) schwenkbare Wippe (6) und eine Drehmomenteinrichtung (9) zum Einstellen eines um die Wippenachse (5) auf die Wippe (6) wirkenden vorgebbaren Drehmomentes umfasst, die Wippenachse (5) an der Trageinrichtung (4) positioniert ist, die Bürsteneinrichtung (8) an der Wippe (6) angeordnet ist, eine resultierende Gewichtskraft der Bürsteneinrichtung (8) in einem Abstand zur Wippenachse (5) auf die Wippe (6) übertragen wird und die Drehmomenteinrichtung (9) ein in einem Abstand zur Wippenachse (5) an der Wippe (6) angeordnetes Gewicht (15) umfasst, **dadurch gekennzeichnet, dass** die Drehmomenteinrichtung (9) den Abstand des Gewichts (15) von der Wippenachse (5) einstellbar macht und dazu einen Stellantrieb (17) umfasst, der das an der Wippe (6) angeordnete Gewicht (15) über eine erste Betätigungsverbindung entlang der Wippe (6) verstellbar macht.

2. Schmiervorrichtung (1) nach Anspruch 1, **dadurch gekennzeichnet, dass** die Grösse des Gewichts (15) verstellbar ist.

3. Schmiervorrichtung (1) nach Anspruch 1 oder 2, **dadurch gekennzeichnet, dass** die erste Betätigungsverbindung ausgehend von einer vom Stellantrieb (17) drehbaren Welle (18) eine an der Welle (18) befestigte erste Kurbel (19) und einen vom freien Ende der ersten Kurbel (19) zum Gewicht (15) führenden Pleuel (20) umfasst.

4. Schmiervorrichtung (1) nach einem der Ansprüche 1 bis 3, **dadurch gekennzeichnet, dass** der Stellantrieb (17) über eine zweite Betätigungsverbindung die Wippe (6) in eine Parkposition mit vom Käselaib abgehobener Bürste (3) schwenkbar macht.

5. Schmiervorrichtung (1) nach Anspruch 4, **dadurch gekennzeichnet, dass** die zweite Betätigungsverbindung eine an der drehbaren Welle (18) befestigte zweite Kurbel (22) umfasst, welche mit einer Kraft auf die Wippe (6) wirkt, die der resultierende Gewichtskraft der Bürsteneinrichtung (8) entgegengesetzt ist.

6. Schmiervorrichtung (1) nach einem der Ansprüche 1 bis 5, **dadurch gekennzeichnet, dass** die Bürsteneinrichtung (8) einen Bürstenantrieb (10) umfasst, der die als Tellerbürste ausgebildete Bürste (3) um eine im Wesentlichen senkrecht zur Käseoberfläche ausgerichtete Achse drehbar macht.

7. Schmiervorrichtung (1) nach einem der Ansprüche 1 bis 6, **dadurch gekennzeichnet, dass** die verstellbare Verbindung zwischen der Trageinrichtung (4) und der Bürsteneinrichtung (8) als schwenkbare Parallelogramm-Verbindung mit zwei Armen und zwei kurzen Gliedern ausgebildet ist, wobei die Arme an der Wippe (6) sowie von der Trageinrichtung (4) zur Bürsteneinrichtung (8) und die kurzen Glieder an der Trageinrichtung (4) sowie an der Bürsteneinrichtung (8) ausgebildet sind.

8. Schmiervorrichtung (1) nach einem der Ansprüche 1 bis 7, **dadurch gekennzeichnet, dass** die verstellbare Verbindung zwischen der Trageinrichtung (4) und der Bürsteneinrichtung (8) eine Entlastungsfeder (21) umfasst, welche einen Anteil der resultierenden Gewichtskraft reduziert.

9. Schmiervorrichtung (1) nach einem der Ansprüche 1 bis 7, **dadurch gekennzeichnet, dass** an der Trageinrichtung (4) ein Drehteller (23) drehbar angeordnet ist, wobei der Drehteller (23) und die Bürsteneinrichtung (8) so relativ zueinander positioniert sind, dass die Oberseite eines auf dem Drehteller (23) angeordneten Käselaibs (2) von der Bürste (3) in einem von der Järbseite bis über die Mitte der Oberfläche hinausgehenden Bereich kontaktierbar ist.

10. Schmiervorrichtung (1) nach Anspruch 9, **dadurch gekennzeichnet, dass** die Schmiervorrichtung (1) auch eine an der Trageinrichtung (4) drehbar angeordnete Randbürste (25) umfasst, wobei die Randbürste (25) in einer an den Käserand angepassten Position die Järbseite schmierbar macht.

## Claims

1. A smearing device (1) for smearing blocks of cheese (2), comprising a support apparatus (4) and a brush apparatus (8), the brush apparatus (8) being connected to the support apparatus (4) by means of an adjustable connection and comprising a brush (3), which can be applied to the top of the block of cheese (2) at a contact pressure, the smearing device (1) comprising a rocker (6) pivotable about a rocker axis (5) and a torque apparatus (9) for setting a predefinable torque acting on the rocker (6) about the rocker axis (5), the rocker axis (5) being positioned on the support apparatus (4), the brush apparatus (8) being arranged on the rocker (6), a resulting weight force of the brush apparatus (8) being transmitted to the rocker (6) at a distance from the rocker axis (5), and the torque apparatus (9) having a weight (15) arranged on the rocker (6) at a distance from the rocker axis (5), **characterized in that** the torque apparatus (9) renders the distance of the weight (15) from the rocker axis (5) adjustable and, for this purpose, comprises a actuating drive (17), which renders the weight (15) arranged on the rocker (6) adjustable along the rocker (6) by means of a first actuation connection.

2. The smearing device (1) according to Claim 1, **characterized in that** the size of the weight (15) is adjustable.

3. The smearing device (1) according to Claim 1 or 2, **characterized in that** the first actuation connection, starting from a shaft (18) that is rotatable by the actuating drive (17), comprises a first crank (19) fastened to the shaft (18) and a connecting rod (20) leading from the free end of the first crank (19) to the weight (15).

4. The smearing device (1) according to any one of Claims 1 to 3, **characterized in that** the actuating drive (17) renders the rocker (6) pivotable into a parked position with the brush (3) raised up from the block of cheese by means of a second actuation connection.

5. The smearing device (1) according to Claim 4, **characterized in that** the second actuation connection comprises a second crank (22) which is fastened to the rotatable shaft (18) and acts on the rocker (6) with a force that is counter to the resulting weight force of the brush apparatus (8).

6. The smearing device (1) according to any one of Claims 1 to 5, **characterized in that** the brush apparatus (8) comprises a brush drive (10), which renders the brush (3), designed as a disk brush, rotatable about an axis oriented substantially perpendicularly to the surface of the cheese.

7. The smearing device (1) according to any one of Claims 1 to 6, **characterized in that** the adjustable connection between the support apparatus (4) and the brush apparatus (8) is designed as a pivotable parallelogram connection comprising two arms and two short links, the arms being formed on the rocker (6) and from the support apparatus (4) to the brush apparatus (8) and the short links being formed on the support apparatus (4) and on the brush apparatus (8).

8. The smearing device (1) according to any one of Claims 1 to 7, **characterized in that** the adjustable connection between the support apparatus (4) and the brush apparatus (8) comprises a relief spring (21), which reduces a proportion of the resulting weight force.

9. The smearing device (1) according to any one of Claims 1 to 7, **characterized in that** a rotary disk (23) is rotatably arranged on the support apparatus (4), the rotary disk (23) and the brush apparatus (8) being positioned relative to one another such that the top of a block of cheese (2) arranged on the rotary disk (23) can be contacted by the brush (3) in a region extending from the outer face to beyond the middle of the surface.

10. The smearing device (1) according to Claim 9, **characterized in that** the smearing device (1) also comprises an outer face brush (25) rotatably arranged on the support apparatus (4), the outer face brush (25) making the outer face smearable in a position adjusted to the outer face of the cheese.

## Revendications

1. Dispositif de frottage (1) pour frotter des fromages entiers (2) avec un dispositif support (4) et un dispositif de brosse (8), le dispositif de brosse (8) étant relié au dispositif support (4) par une liaison ajustable et comprenant une brosse (3), laquelle peut être appliquée sur un côté supérieur du fromage entier (2) avec une force de pression, le dispositif de frottage (1) comprenant une bascule (6) pouvant basculer sur un axe de bascule (5) et un dispositif de couple (9) pour le réglage d'un couple spécifiable agissant sur la bascule (6) sur l'axe de bascule (5), l'axe de bascule (5) étant positionné sur le dispositif support (4), le dispositif de brosse (8) étant disposé sur la bascule (6), une force pondérale résultante du dispositif de brosse (8) étant transmise à la bascule (6), à une distance de l'axe de bascule (5), et le dispositif de couple (9) comprenant un poids (15) disposé sur la bascule (6), à une distance de l'axe de bascule (5), **caractérisé en ce que** le dispositif de couple (9) rend réglable la distance entre le poids (15) et l'axe de bascule (5) par un moteur d'actionnement(17), lequel rend ajustable le poids (15) disposé sur la bascule (6) par une première liaison d'actionnement le long de la bascule (6).

2. Dispositif de frottage (1) selon la revendication 1, **caractérisé en ce que** la grandeur du poids (15) est ajustable.

3. Dispositif de frottage (1) selon la revendication 1 ou 2, **caractérisé en ce que** la première liaison d'actionnement comprend une première manivelle (19) fixée sur l'arbre (18), à partir d'un arbre (18) pivotable par le moteur d'actionnement (17), et une bielle (20) menant de l'extrémité libre de la première manivelle (19) au poids (15).

4. Dispositif de frottage (1) selon l'une quelconque des revendications 1 à 3, **caractérisé en ce que** le moteur d'actionnement (17) rend pivotable la bascule (6) dans une position de stationnement avec la brosse (3) relevée au-dessus du fromage entier, par une deuxième liaison d'actionnement.

5. Dispositif de frottage (1) selon la revendication 4, **caractérisé en ce que** la deuxième liaison d'actionnement comprend une deuxième manivelle (22) fixée sur l'arbre rotatif (18), laquelle agit sur la bascule (6) avec une force étant opposée à la force pondérale résultante du dispositif de brosse (8).

6. Dispositif de frottage (1) selon l'une quelconque des revendications 1 à 5, **caractérisé en ce que** le dispositif de brosses (8) comprend un entraînement de brosses (10), lequel rend tournante la brosse (3) formée comme brosse circulaire sur un axe orienté essentiellement de façon verticale par rapport à la surface du fromage.

7. Dispositif de frottage (1) selon l'une quelconque des revendications 1 à 6, **caractérisé en ce que** la liaison ajustable entre le dispositif support (4) et le dispositif de brosse (8) est formée comme liaison en parallélogramme pivotable avec deux bras et deux membres courts, les bras étant formés sur la bascule (6) ainsi que du dispositif support (4) au dispositif de brosse (8) et les membres courts étant formés sur le dispositif support (4) ainsi que sur le dispositif de brosse (8).

8. Dispositif de frottage (1) selon l'une quelconque des revendications 1 à 7, **caractérisé en ce que** la liaison ajustable entre le dispositif support (4) et le dispositif de brosse (8) comprend un ressort de décharge (21), lequel réduit une partie de la force pondérale résultante.

9. Dispositif de frottage (1) selon l'une quelconque des revendications 1 à 7, **caractérisé en ce qu'**un plateau tournant (23) est disposé de façon tournante sur le dispositif support (4), le plateau tournant (23) et le dispositif de brosse (8) pouvant être positionnés relativement l'un par rapport à l'autre de telle sorte que le côté supérieur d'un fromage entier (2) disposée sur le plateau tournant (23) peut être mis en contact avec la brosse (3) dans une zone s'étendant de la face latérale jusqu'au milieu de la surface.

10. Dispositif de frottage (1) selon la revendication 9, caractérisé en ce le dispositif de frottage (1) comprend également une brosse de pourtour (25) disposée de façon tournante sur le dispositif support (4), la brosse de pourtour (25) rendant frottable la face latérale dans une position ajustée a la face latéral du fromage.
